# FASCICULE DE BREVET EUROPEEN

(11) **EP 4 182 156 B1**
(45) Date de publication et mention de la délivrance du brevet: **28.01.2026**
(21) Numéro de dépôt: 21755532.5
(22) Date de dépôt: 19.07.2021
(51) Int. Cl.: B29C 67/24, D04H 1/4209, D04H 1/4218, D04H 1/4226, D04H 1/58, D04H 1/732, F27B 9/10, F27B 9/24, F24F 11/00, F24F 11/30, F24F 11/49, F24F 11/62, F24F 11/72

(54) **PROCEDE DE VENTILATION D'UNE ETUVE**
VERFAHREN ZUM BELÜFTEN EINES OFENS
METHOD FOR VENTILATING AN OVEN

(30) Priorité: 20.07.2020 FR 2007570
(43) Date de publication de la demande: 24.05.2023
(73) Titulaire: SAINT-GOBAIN ISOVER, 92400 Courbevoie (FR)
(72) Inventeur: CALDICHOURY, Kattalin, 93300 AUBERVILLIERS (FR)
(74) Mandataire: Saint-Gobain Recherche
(86) Numéro de dépôt international: PCT/FR2021/051349
(87) Numéro de publication internationale: WO 2022/018374

(56) Documents cités:
- EP-A1- 3 434 991
- FR-A1- 2 918 365
- US-A1- 2018 113 482

## Description

La présente invention concerne un procédé de ventilation d'une étuve de traitement de fibres minérales.

Les étuves utilisées dans la fabrication de matériaux isolants à fibres minérales permettent de chauffer les fibres minérales obtenues au préalable dans un poste de fibrage, ces fibres minérales arrivant dans l'étuve noyées dans un liant, et le chauffage générée dans l'étuve permet de former une couche de matériau isolant à fibre minérale en sortie de l'étuve.

Une telle étuve comprend à cet effet au moins un convoyeur, sur lequel sont déposées en entrée les fibres minérales et le liant, et une succession de caissons de chauffe agencés en série et que le convoyeur traverse successivement, chaque caisson comportant deux modules disposés de part et d'autre du convoyeur. Différents types de chauffage peuvent être mis en œuvre au sein d'une telle étuve, parmi lesquels des chauffages électriques, par infrarouge ou par microondes.

Chaque caisson peut notamment comprendre respectivement au moins un module de soufflage et un module d'aspiration. Le module de soufflage comporte notamment un brûleur à gaz, dont les fumées circulent à travers le module de soufflage jusqu'au caisson de chauffe. Le module d'aspiration est lui configuré pour récolter les fumées présentes dans le caisson correspondant afin d'en redistribuer une partie dans le brûleur. Également, l'étuve comprend au moins une cheminée permettant d'évacuer une partie des fumées résultant de la combustion de matière dans les brûleurs, notamment en les aspirant.

Dans de telles étuves, et quel que soit le type de chauffage, une ventilation des caissons est nécessaire afin de limiter les risques d'explosion dû aux matériaux inflammables qui s'échappent lors de la cuisson. Une telle ventilation est conditionnée à la température atteinte par, ou que peut atteindre, ladite étuve en fonctionnement, ainsi que le cas échéant aux types de matériaux qui circulent au sein de l'étuve et à une quantité de polluants qui résultent de la cuisson dudit matériau.

S'il est facile de mesurer la température au sein de l'étuve, et d'adapter le cas échéant une ventilation de cette étuve en fonction de la température mesurée, il peut toutefois être plus complexe de quantifier la quantité de polluants résultant de la cuisson du matériau. Afin d'être certain de ventiler suffisamment l'étuve pour éviter une explosion, il est dès lors connu de surdimensionner la ventilation de l'étuve dans chacune de ces zones, c'est à dire depuis l'entrée jusqu'à la sortie du convoyeur, dans chacun des caissons de chauffe que traverse le convoyeur.

Le document FR 2 918 365 décrit un procédé de ventilation d'une étuve configurée pour former un tapis de fibres minérales par cuisson d'un liant encollant un matériau minéral disposé sur un convoyeur. L'étuve comprend, en série sur le trajet du convoyeur, une entrée, des caissons de chauffe et une sortie.

L'invention s'inscrit dans ce contexte et vise à améliorer les étuves existantes, en visant notamment à optimiser la ventilation des étuves par une ventilation appropriée dans chacun des caissons de l'étuve. L'invention permet cette optimisation de la ventilation notamment en établissant et considérant par la suite un modèle prédictif d'estimation des quantités de polluants à extraire de chacun des caissons de l'étuve de manière indépendante, en fonction de différents paramètres de l'étuve, afin d'ajuster la ventilation de l'étuve aux besoins réels de chacun des caissons. De la sorte on réduit les coûts associés au fonctionnement général de l'étuve tout en limitant les risques d'explosion de l'étuve.

L'invention propose donc un procédé de ventilation d'une étuve configurée pour former un tapis de fibres minérales par cuisson d'un liant encollant un matériau minéral disposé sur un convoyeur, l'étuve comprenant en série sur le trajet du convoyeur, une entrée, une pluralité de caissons de chauffe et une sortie, le procédé de ventilation comprenant au moins la mise en œuvre, par une unité de contrôle de l'étuve, de plusieurs étapes successives parmi lesquelles :
une première étape de détermination par calcul, caisson par caisson ou ensemble de caissons par ensemble de caissons, d'une quantité de polluants présents dans au moins deux caissons ou deux ensembles de caissons de l'étuve, ladite première étape mettant en œuvre une comparaison des caractéristiques du fonctionnement en cours de l'étuve avec un modèle prédictif défini en amont et implémenté dans l'unité de contrôle de l'étuve,
une deuxième étape de détermination par calcul d'un débit de ventilation minimal pour l'évacuation de la quantité de polluants dans chacun des deux caissons ou des deux ensembles de caissons,
une troisième étape de génération d'une instruction de commande indépendante à destination de chacun des caissons, ou de chacun des ensembles de caissons, pour une ventilation spécifique de chaque caisson ou de chaque ensemble de caissons en fonction du débit de ventilation minimal calculé précédemment spécifiquement pour chacun des caissons ou ensemble de caissons.

La première étape de détermination par calcul, caisson par caisson ou ensemble de caissons par ensemble de caissons, de la quantité de polluants se base sur un modèle prédictif qui utilise des données telles que le type de liant utilisé, la configuration et les paramètres de fonctionnement de l'étuve, notamment sa température, afin de déterminer la perte de masse du liant puis la quantité de polluants associé à cette perte de masse. Dit autrement, le modèle prédictif permet d'estimer au sein d'un caisson spécifique, ou d'un ensemble de caissons spécifique, la quantité de polluants qui se dégagent du liant encollant le matériau minéral lors de sa cuisson, et ce indépendamment dans chacun des caissons de l'étuve ou ensembles de caissons de l'étuve. Le modèle prédictif peut notamment consister en une base de données obtenue préalablement au fonctionnement de l'étuve et applicable en temps réel lors du fonctionnement de l'étuve afin de déterminer de manière précise la quantité de polluants émise par la cuisson du liant encollant le matériau minéral lors de ce fonctionnement de l'étuve. Les données du modèle prédictif sont notamment intégrées à l'unité de contrôle de l'étuve.

On comprend qu'on utilise le modèle prédictif lors de la première étape afin de déterminer la quantité de polluants dans au moins deux caissons ou deux ensembles de caissons, la quantité de polluants pouvant varier d'un caisson à l'autre ou d'un ensemble de caissons à l'autre en fonction des paramètres de fonctionnement de l'étuve et de la réaction du liant encollant le matériau minéral dans chacun des caissons ou ensembles de caissons suivant ces paramètres. On définit notamment par ensemble de caissons, une pluralité de caissons disposés successivement le long du convoyeur. De manière avantageuse, on détermine la quantité de polluants dans chacun des caissons ou ensemble de caissons que comprend l'étuve.

La deuxième étape permet de déterminer par calcul le débit de ventilation minimal qui est nécessaire pour évacuer la quantité de polluants dans chacun des caissons ou ensemble de caissons, déterminée lors de la première étape. Cette deuxième étape de calcul est effectuée en prenant en considération une valeur limite explosive. On définit la valeur limite explosive (ou LEL pour l'acronyme « Lower Explosive Limit » en anglais) comme la valeur maximum au-delà de laquelle une quantité de polluants dans un des caissons ou un des ensembles de caissons peut générer une explosion. De manière plus précise, la valeur limite explosive correspond à une concentration, en g/m³, maximum de polluants pouvant être présents dans un caisson ou ensemble de caissons, avant que cette concentration ne soit génératrice d'une explosion au sein de l'étuve. Cette valeur limite explosive peut notamment être déterminée pour une température donnée et plus précisément pour une plage de températures données.

La troisième étape du procédé prend en compte le débit de ventilation minimal pour l'évacuation des polluants de chacun des caissons ou de chacun des ensembles de caissons afin d'appliquer une instruction de commande spécifique et propre à chacun des caissons ou ensemble de caissons. On comprend alors qu'un des avantages du procédé est notamment qu'il permet d'une part la détermination de la quantité de polluants qui est présente dans chacun des caissons indépendamment des autres caissons, et qu'il permet d'autre part l'application d'une instruction de commande spécifique indépendamment dans chacun des caissons. On comprend donc que chacun des caissons que comprend l'étuve est apte à appliquer, en réponse à une instruction de commande spécifique différente d'un caisson à l'autre, une ventilation spécifique dimensionnée pour évacuer une quantité de polluants qui est propre à ce caisson. L'instruction de commande spécifique peut être par exemple et de manière non limitative une augmentation de la puissance d'extraction des polluants au moyen des cheminées ou la mise en marche d'une ventilation additionnelle.

Le but de l'invention est donc d'obtenir une ventilation adéquate, et d'assurer un débit de ventilation minimal, dans chacun des caissons afin que la concentration des polluants ne dépasse pas la valeur limite explosive en fonction de la température de chacun des caissons. On tire avantage de ce procédé en ce qu'il permet une fiabilité de la prédiction de la quantité de polluants dans chacun des caissons, et donc la mise en œuvre d'une ventilation appropriée et efficace pour éviter les explosions au sein de l'étuve, sans nécessiter une mesure en temps réel de celle-ci.

Selon une caractéristique optionnelle de l'invention, le procédé de ventilation comprend au moins une étape de construction du modèle prédictif implémenté dans l'unité de contrôle. Tel que cela a été évoqué, la construction du modèle prédictif permet de paramétrer l'unité de contrôle de l'étuve avec des données spécifiques à ladite étuve et au matériau minéral qui est cuit dans cette étuve. Sans sortir du contexte de l'invention, le modèle prédictif peut être réalisé sur site, avant la première mise en œuvre de l'étuve ou au bout d'une certaine durée de fonctionnement pour réactualiser le modèle prédictif avec l'usure éventuelle de l'étuve, ou bien il peut être réalisé à distance, par exemple dans un laboratoire, dans des conditions représentatives du fonctionnement de l'étuve.

Selon une caractéristique optionnelle de l'invention, lors de l'étape de construction du modèle prédictif, on détermine au moins une perte de masse du matériau minéral en fonction d'une température de cuisson. Afin de déterminer cette perte de masse, on peut notamment effectuer des tests en conditions réelles, c'est-à-dire en procédant à la cuisson, à une température de cuisson donnée, d'un échantillon de liant encollant un matériau minéral dans un four reproduisant les paramètres de fonctionnement de l'étuve sur laquelle on souhaite implémenter le modèle prédictif, et en pesant cet échantillon préalablement à l'étape de cuisson et ultérieurement à cette étape de cuisson. La réalisation d'une pluralité de tests, sous différentes conditions de cuisson et pour différents types de matériau minéral et de liant, permet ainsi d'établir une base de données recensant les pertes de masse d'un type de liant encollant un type de matériau minéral, en fonction de la température de cuisson. Il convient de considérer que la température de cuisson est ici une température que l'on arrive à maintenir sensiblement constante à l'intérieur du four tout au long du test, cette température de cuisson représentant la température telle que souhaitée dans l'étuve au cours de son fonctionnement

Selon une caractéristique optionnelle de l'invention, lors de l'étape de construction du modèle prédictif, on utilise au moins la perte de masse du matériau minéral pour déterminer la quantité de polluants dégagée lors de la cuisson du matériau minéral.

La perte de masse du matériau minéral permet de déterminer la quantité de polluants qui résulte de la cuisson du liant encollant le matériau minéral, et il est notable que selon une caractéristique de l'invention, ladite détermination de la quantité de polluants peut être réalisée notamment en ne tenant pas compte de la masse des composés non inflammables. Il convient de comprendre que la cuisson du liant encollant le matériau minéral génère le dégagement de polluants inflammables et de matériaux non inflammables, tel que par exemple l'évaporation d'une quantité d'eau donnée. Selon une caractéristique de l'invention, dans le contexte de la détermination de quantité de polluants dégagée lors de la cuisson du matériau minéral encollé, l'évaporation des matériaux non inflammables n'est pas prise en compte dans la détermination de la quantité de polluants dégagée lors de l'établissement du modèle prédictif. Cette quantité de polluants déterminée pour obtenir le modèle prédictif prend en compte uniquement le dégagement des composés présentant des propriétés inflammables. En d'autres termes, l'application du modèle prédictif permet de déterminer la quantité de polluants inflammables générée dans chacun des caissons de l'étuve par la cuisson du matériau minérale encollé.

Dès lors, le modèle prédictif est généré en créant une base de données de différents paramètres représentatifs du fonctionnement de l'étuve. Dit autrement, on fait varier les paramètres de fonctionnement du four dans lequel le test est réalisé, notamment la température de cuisson, afin de déterminer la quantité de polluants qui s'échappe du liant encollant le matériau minéral sous l'effet de chacune des températures de cuisson établies, de manière à pouvoir considérer par la suite que pour une température de fonctionnement donnée de l'étuve, la quantité de polluants sera connue. De la sorte et selon cet exemple, on établit une base de données d'une quantité de polluants estimée en fonction d'une température de fonctionnement de l'étuve pour différents types de liants, cette base de données étant ensuite utilisée en temps réel lors du fonctionnement de l'étuve.

Selon une caractéristique optionnelle de l'invention, lors d'une étape préliminaire préalable à la première étape, on mesure une température effective dans chacun des caissons ou ensembles de caissons.

On entend par température effective la température mesurée localement, c'est-à-dire dans un caisson ou un ensemble de caissons, lors du fonctionnement de l'étuve. La mesure de température effective réalisée lors de l'étape préliminaire permet par la suite d'appliquer le modèle prédictif, celui-ci corrélant des quantités de polluants qui s'échappent du liant encollant le matériau minéral en fonction de la température effective mesurée tel qu'expliqué précédemment, en faisant correspondre une température de cuisson de la base de données avec la température effective mesurée.

Selon une caractéristique optionnelle de l'invention, préalablement à la troisième étape, on détermine une valeur seuil de débit de ventilation maximum dans chacun des caissons ou ensemble de caissons de l'étuve.

La valeur seuil de débit de ventilation maximum dans chacun des caissons correspondant à la capacité maximale de ventilation que chacun des caissons ou ensemble de caissons peut fournir. Chacun des caissons de l'étuve présente une capacité d'évacuation des fumées et/ou des polluants dudit caisson, qui peut varier notamment en fonction des moyens de ventilation qui sont associés à ce caisson et en fonction de sa position au sein de l'étuve par rapport à des cheminées d'extraction, et on comprend que selon cette caractéristique de l'invention, on peut appliquer des instructions de commande indépendantes à chacun des caissons en fonction de la capacité maximale de ventilation que ce caisson est susceptible de mettre en œuvre.

Selon une caractéristique optionnelle de l'invention, lors d'une étape intermédiaire, préalablement à la troisième étape, on mesure un débit effectif de ventilation dans chacun des caissons ou ensembles de caissons, et on compare le débit effectif de ventilation de chacun des caissons ou ensembles de caissons au débit de ventilation minimal déterminé lors de la deuxième étape pour l'évacuation des polluants dans lesdits caissons ou ensembles de caissons.

Cette comparaison permet de constater si la ventilation effective du caisson ou ensemble de caissons est adéquate pour l'évacuation de la quantité de polluants dans le caisson déterminée lors de la première étape.

Selon une caractéristique optionnelle de l'invention, lors de la troisième étape, lorsque le débit effectif de ventilation mesuré dans un des caissons ou un des ensembles de caissons est inférieur au débit de ventilation minimal pour l'évacuation des polluants dans ledit caisson et que ledit débit de ventilation minimal est inférieur à la valeur seuil de débit de ventilation maximum dudit caisson, on augmente la puissance d'extraction d'au moins une cheminée d'extraction commune à l'ensemble de l'étuve et/ou d'un module d'aspiration propre audit caisson ou audit ensemble de caissons.

On comprend que cette troisième étape peut être mise en œuvre lors du fonctionnement de l'étuve, cette étape consistant à augmenter le débit de ventilation des cheminées d'extraction communes à l'ensemble de l'étuve et/ou du module d'aspiration propre au caisson ou à l'ensemble de caissons afin d'abaisser la quantité des polluants du caisson ou ensemble de caissons en dessous de la valeur limite explosive.

Selon une caractéristique optionnelle de l'invention, lors de la troisième étape, lorsque le débit de ventilation minimal est supérieur à la valeur seuil de débit de ventilation maximum dudit caisson ou dudit ensemble de caissons, on arrête le fonctionnement de l'étuve, et plus particulièrement le mouvement du convoyeur et la circulation du tapis de fibres minérales au sein de l'étuve, et on active au moins une ventilation additionnelle dans le caisson ou ensemble de caissons.

On comprend que l'utilisation de la ventilation additionnelle est nécessaire lorsque l'étuve, et notamment les cheminées d'extraction, ne peuvent fournir une ventilation suffisante pour l'évacuation des polluants au regard de la valeur seuil de débit de ventilation maximum du caisson ou ensemble de caissons, comparée au débit de ventilation minimal qui est strictement supérieur à ladite valeur seuil de débit de ventilation maximum.

On comprend que, dans une configuration où le débit effectif de ventilation mesuré dans un des caissons ou ensemble de caissons est au moins égal au débit de ventilation minimal pour l'évacuation des polluants et que ce dernier est inférieur ou égal à la valeur seuil de débit de ventilation maximum de l'étuve, la ventilation additionnelle n'est pas activée et le débit de ventilation des cheminées d'extraction n'est pas augmenté.

On comprend également que, dans une configuration où le débit effectif de ventilation mesuré dans un des caissons est supérieur au débit de ventilation minimal pour l'évacuation des polluants dudit caisson, on peut réduire le débit de ventilation d'au moins une des cheminées d'extraction. On contrôle avantageusement cette réduction, en la prolongeant tant que la quantité de polluants dans la zone de l'étuve la plus concentrée en polluants reste contenue sous une valeur correspondant à un pourcentage de la valeur limite explosive de ladite zone, par exemple 40% de cette valeur limite explosive.

On comprend de ce qui a été exposé ci-dessus que le procédé de ventilation permet d'ajuster la ventilation de l'étuve au cas par cas en fonction des besoins de chacun des caissons ou ensemble de caissons de l'étuve. Dit autrement, on permet de varier la ventilation de chacun des caissons ou ensemble de caissons de manière indépendante, tout en s'assurant de ventiler chacun des caissons ou ensemble de caissons de manière adéquate pour l'évacuation des polluants, et ainsi limiter les risques d'explosion de l'étuve. On permet ainsi avantageusement de réduire les couts dus à une ventilation d'un débit largement supérieur aux besoins respectifs de chacun des caissons ou de chacun des ensembles de caissons. On assure ainsi une réduction des coûts associés au fonctionnement de l'étuve, ainsi que sa durée de vie.

Selon une caractéristique optionnelle de l'invention, lors d'une étape additionnelle et préalablement à la deuxième étape, on détermine par calcul une quantité de fluide susceptible de passer d'un caisson à un autre caisson, ou d'un ensemble de caissons à un autre ensemble de caissons, lors du fonctionnement de l'étuve, la quantité de fluide étant prise en compte pour déterminer la quantité de polluants présents dans un caisson ou un ensemble de caissons lors de la première étape.

L'étape additionnelle peut notamment s'effectuer au moyen d'un traçage par l'intermédiaire d'un gaz inerte, pouvant être de l'hélium. Une telle méthode de traçage au gaz inerte consiste à déterminer les mouvements fluidiques d'un caisson à l'autre d'un gaz spécifique dont on peut mesurer la concentration, par exemple de l'hélium, puis d'en déduire une généralisation sur les mouvements fluidiques des polluants entre chacun des caissons.

On comprend alors que la quantité de polluants présents pour un caisson ou ensemble de caissons inclut à la fois les polluants qui sont générés par la perte de masse du matériau minéral lors de sa cuisson dans ledit caisson et déterminée par le modèle prédictif, et également la circulation des polluants d'un caisson adjacent audit caisson.

Selon une caractéristique optionnelle de l'invention, les étapes du procédé sont effectuées au cours du fonctionnement de l'étuve.

L'invention porte également sur une étuve configurée pour former un tapis de fibres minérales par cuisson d'un liant encollant un matériau minéral disposé sur un convoyeur, l'étuve comprenant en série sur le trajet du convoyeur, une entrée, une pluralité de caissons de chauffe et une sortie, l'étuve comprenant au moins une unité de contrôle configurée pour piloter le fonctionnement de chacun des caissons selon le procédé de ventilation tel que précédemment évoqué.

Chacun des caissons de l'étuve peut notamment comprendre au moins un module d'aspiration et un module de soufflage. Le module de soufflage du caisson permet de souffler des fumées, provenant d'un brûleur à gaz, dans le caisson, et plus précisément au travers des fibres minérales disposées sur le convoyeur, suivant une direction de soufflage sensiblement perpendiculaire à la direction longitudinale de l'étuve et au sens de défilement du convoyeur. Un tel soufflage des fumées permet d'activer la polymérisation du liant avec les fibres minérales. Le module d'aspiration permet par la suite d'aspirer lesdites fumées du caisson afin d'évacuer au moins une partie des fumées vers le brûleur auquel est relié le module de soufflage. Le caisson peut fonctionner ainsi majoritairement en circuit fermé. Il convient de noter que l'invention vise à couvrir des étuves, quel que soit le type de chauffage, dans lesquelles des polluants issus de la polymérisation du liant sont à évacuer.

Les modules de soufflage et les modules d'aspiration peuvent être disposés dans chacun des caissons, de telle sorte que les fumées de chacun des modules de soufflage traversent les fibres minérales suivant un même premier sens de soufflage.

Selon une alternative, il est possible de disposer les modules d'aspiration et les modules de soufflage dans chacun des caissons de telle sorte qu'au moins un des modules de soufflage d'un des caissons projette les fumées de son brûleur selon un deuxième sens de soufflage, opposé au premier sens de soufflage. L'étuve peut alors comprendre le premier caisson et le deuxième caisson dont les modules de soufflage projettent les fumées suivant le premier sens de soufflage et le troisième caisson dont le module de soufflage projette la fumée au travers des fibres minérales suivant le deuxième sens de soufflage. Une telle configuration des modules de soufflage permet d'optimiser la polymérisation des fibres minérales avec le liant en faisant pénétrer la fumée au travers des fibres minérales suivant deux directions opposées.

Selon une caractéristique optionnelle de l'invention, chacun des caissons de la pluralité de caissons comprend au moins une ventilation additionnelle, la ventilation additionnelle étant pilotée par l'unité de contrôle selon le procédé de ventilation de l'étuve.

La ventilation additionnelle peut notamment consister en des moyens de ventilation complémentaires de l'étuve qui viennent s'ajouter aux cheminées d'extraction et aux moyens de ventilation, ou ventilateurs, prévus dans les modules de soufflage ou d'aspiration propre à chaque caisson. Le fait d'avoir une ventilation additionnelle propre à chaque caisson de l'étuve permet, sous le pilotage de l'unité de contrôle, en fonction de conditions particulières de fonctionnement de l'étuve, de réaliser une ventilation importante ciblée sur un ou plusieurs caissons, de manière temporaire lors de son fonctionnement, ou bien uniquement lorsque l'étuve est arrêtée.

D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, sur lesquels :
[fig 1] est une vue schématique d'une étuve dans laquelle est mis en œuvre le procédé de ventilation d'une étuve selon l'invention ;
[fig 2] est une vue en coupe verticale de l'étuve de la figure 1 ;
[fig 3] est un logigramme des principales étapes du procédé de ventilation de l'étuve.

Dans la description qui va détailler, le procédé de ventilation faisant l'objet de l'invention va être décrit en relation avec une étuve dans laquelle le chauffage est réalisée par des brûleurs à gaz, mais il convient de noter que d'autres types de chauffage au sein de l'étuve pourraient être mis en œuvre sans sortir du contexte de l'invention.

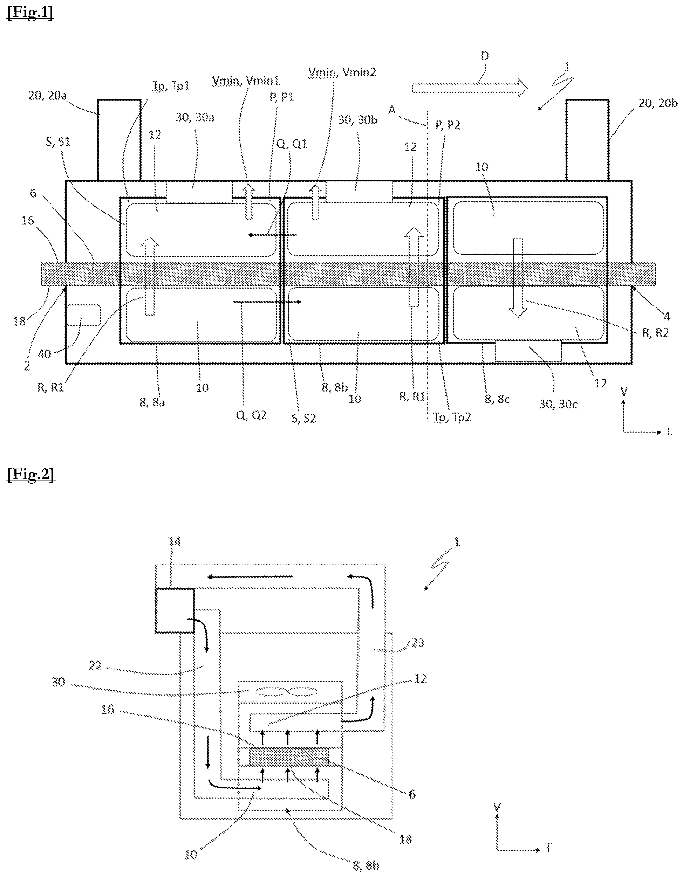

Une étuve 1, selon un aspect de l'invention, est illustrée sur la figure 1. Cette étuve est configurée pour cuire le liant agencé au sein et/ou autour d'un amas de fibres minérales pour encoller celles-ci et peut notamment faire partie d'une installation de fabrication de laine minérale, dans laquelle il est nécessaire de réaliser au moins une étape de cuisson d'un matériau minéral. Plus particulièrement, une laine minérale peut être obtenue par une succession d'étapes, parmi lesquelles notamment une étape de fibrage au cours de laquelle on projette un liant sur des fibres minérales obtenues au préalable par traitement de verre fondu, et une étape de cuisson du mélange liant-fibres ainsi obtenu au cours de l'étape de fibrage. Lors de cette étape de cuisson du mélange, le passage dans une étuve permet d'activer la polymérisation du polymère formant liant avec les fibres minérales.

A cette fin, l'étuve 1 telle qu'elle est illustrée schématiquement à la figure 1 s'étend majoritairement dans une direction d'allongement principale, aussi appelée direction longitudinale L de l'étuve 1, et comprend une entrée 2 et une sortie 4 disposées chacune à une extrémité longitudinale de l'étuve 1, ainsi qu'un convoyeur 6 sur lequel sont disposées les fibres minérales mélangées au liant. Le convoyeur 6 présente la forme d'un tapis roulant apte à supporter les fibres minérales et apte à les transporter dans l'étuve 1 suivant un sens de circulation D parallèle à la direction longitudinale L de l'étuve 1. Sur le trajet du convoyeur 6 est disposée une pluralité de caissons 8 de chauffe, respectivement aptes à chauffer les fibres minérales transportées par le convoyeur 6. La pluralité de caissons 8 de chauffe est disposée en série suivant la direction longitudinale L de l'étuve 1, de sorte que le convoyeur 6 traverse successivement chacun des caissons 8 de chauffe de l'étuve 1.

Chacun des caissons 8 de chauffe comprend au moins un module de soufflage 10 et un module d'aspiration 12 disposés de part et d'autre du convoyeur 6. Le module de soufflage 10 est relié à un brûleur 14, visible à la figure 2, dont les fumées sont transportées, via des conduits d'admission 22, en direction du caisson 8 de chauffe jusque dans le module de soufflage 10. Le module d'aspiration 12 permet par la suite d'aspirer une partie des fumées du caisson 8 de chauffe afin d'en redistribuer une partie, via des conduits d'échappement 23, vers le brûleur 14.

De manière plus précise, le module de soufflage 10 projette les fumées du brûleur 14 au travers des fibres minérales disposées sur le convoyeur 6, suivant une direction de soufflage R parallèle à une direction verticale V de l'étuve 1, elle-même perpendiculaire à la direction longitudinale L et une direction transversale T de l'étuve 1.

On définit une première face 16 du convoyeur 6 correspondant à la face portant les fibres minérales et une deuxième face 18 correspondant à la face opposée à la première face 16 suivant la direction verticale V de l'étuve 1. On définit alors un premier sens de soufflage R1 des fumées par le module de soufflage 10, lorsque ledit module de soufflage 10 est disposé en regard de la deuxième face 18 du convoyeur 6 et que le module d'aspiration 12 est en regard de la première face 16 du convoyeur 6.

On définit également un deuxième sens de soufflage R2 des fumées par le module de soufflage 10, opposé au premier sens de soufflage R1 suivant la direction verticale V de l'étuve 1, lorsque le module de soufflage 10 est disposé en regard de la première face 16 du convoyeur 6 et que le module d'aspiration 12 est disposé en regard de la deuxième face 18 du convoyeur 6.

Au moins l'un des modules de soufflage ou d'aspiration comporte un ventilateur principal, associé au caisson, qui permet de mettre en œuvre le sens de circulation et le débit souhaités des fumées au sein d'un caisson.

Selon l'exemple illustré de l'invention, l'étuve 1 comprend trois caissons 8 de chauffe, un premier caisson 8a de chauffe, un deuxième caisson 8b de chauffe et un troisième caisson 8c de chauffe conformes aux caractéristiques précédentes et comprenant chacun un module de soufflage 10 et un module d'aspiration 12 selon les caractéristiques précédemment évoquées. Plus particulièrement le premier caisson 8a et le deuxième caisson 8b présentent chacun leur module de soufflage 10 disposé de telle sorte que les fumées traversent les fibres minérales suivant le premier sens de soufflage R1. Le troisième caisson 8c présente lui son module de soufflage 10 disposé de telle sorte que les fumées traversent les fibres minérales suivant le deuxième sens de soufflage R2.

Une telle disposition des trois caissons 8 de chauffe de l'étuve 1 selon l'exemple illustré de l'invention permet d'améliorer la polymérisation des fibres minérales circulant sur le convoyeur 6 en homogénéisant sa polymérisation sur chacune de ses faces, dû au passage alterné des fumées suivant le premier sens de soufflage R1 et le deuxième sens de soufflage R2.

Toujours selon l'exemple illustré, le premier caisson 8a constitue le caisson le plus proche de l'entrée 2 de l'étuve 1 et le troisième caisson 8c est le plus proche de la sortie 4 de l'étuve 1. On comprend alors que le deuxième caisson 8b est disposé entre le premier caisson 8a et le troisième caisson 8c suivant la direction longitudinale L de l'étuve 1. On définit également au moins un ensemble de caissons formé par au moins deux caissons 8 disposés de manière successive le long du convoyeur 6 de l'étuve. Par exemple, un premier ensemble de caissons peut être formé du premier caisson 8a et du deuxième caisson 8b, tandis qu'un deuxième ensemble de caissons peut être formé par le deuxième caisson 8b et le troisième caisson 8c.

Au moins une cheminée d'extraction 20 est disposée sur l'étuve 1 afin d'évacuer à l'extérieur de l'étuve 1 une partie des fumées résultant du chauffage des fibres minérales et une partie de l'air extérieur s'étant infiltré dans l'étuve 1 au niveau des entrée et sortie du convoyeur 6. Selon l'exemple de l'invention illustré, l'étuve 1 comprend une première cheminée d'extraction 20a et une deuxième cheminée d'extraction 20b. La première cheminée d'extraction 20a est disposée au droit de l'entrée 2 de l'étuve 1 suivant la direction verticale V de l'étuve 1, tandis que la deuxième cheminée d'extraction 20b est disposée au droit de la sortie 4 de l'étuve 1 suivant la direction verticale V de l'étuve 1.

L'étuve 1 comprend également au moins une ventilation additionnelle 30. De manière plus précise, chacun des caissons 8 de l'étuve 1 comprend une ventilation additionnelle 30 dont le fonctionnement est indépendant les unes des autres. Le premier caisson 8a comprend ainsi une première ventilation additionnelle 30a, le deuxième caisson 8b comprend une deuxième ventilation additionnelle 30b et le troisième caisson 8c comprend une troisième ventilation additionnelle 30c. Il convient de considérer que lors du fonctionnement de l'étuve 1, les ventilations additionnelles 30 n'ont pas vocation à être actives de manière continue, celles-ci étant activées lors de conditions particulières de l'étuve 1 qui seront exposées plus loin dans la suite de la description détaillée.

Dans l'exemple illustré, la ventilation additionnelle 30 propre à chaque caisson 8 de l'étuve 1 consiste en un ventilateur distinct du ou des ventilateurs principaux prévus dans le module de soufflage 10 et/ou dans le module d'aspiration 12 pour la circulation des fumées au sein de l'étuve, et plus particulièrement un ventilateur agencé dans le module d'aspiration.

Il convient toutefois de noter que des variantes non illustrées peuvent être mises en œuvre sans sortir du contexte de l'invention. Plus particulièrement, dans une variante, la ventilation additionnelle peut consister en un ventilateur agencé cette fois dans le module de soufflage, étant entendu que conformément à ce qui a été évoqué ci-dessus, ce ventilateur formant ventilation additionnelle n'est pas actionné dans un mode de fonctionnement standard de l'étuve mais est mis en œuvre lorsque des conditions particulières de l'étuve et notamment d'évacuation déficiente des polluants sont constatées. Dans cette variante, conformément à ce qui a été précédemment décrit, la ventilation additionnelle est distincte et indépendante du ou des ventilateurs principaux prévus dans le module de soufflage 10 et/ou dans le module d'aspiration 12 pour la circulation des fumées au sein de l'étuve.

Lors du fonctionnement de l'étuve 1, et notamment lors de la cuisson du liant encollant le matériau minéral, des fumées comprenant en partie des polluants sont produites. De manière plus précise, sous l'effet de la chaleur dégagée dans chacun des caissons 8, le liant encollant le matériau minéral dégage, lors de sa cuisson, une certaine quantité de composés volatils, tels que des polluants ou encore de la vapeur d'eau. Il faut comprendre ici et dans la suite de la description, que l'on nomme par polluants les composés présentant des propriétés d'explosivité.

Afin de limiter les risques d'explosion de l'étuve 1 dû au dégagement de polluants pendant la cuisson du liant encollant le matériau minéral, la ventilation de l'étuve 1 est assurée au moins par les cheminés d'extraction 20, les modules d'aspiration 12 attenant aux caissons 8 et éventuellement par la ventilation additionnelle 30 de chacun des caissons 8. Afin que la ventilation de l'étuve soit efficace et optimale, une unité de contrôle 40 de l'étuve 1 a au moins pour fonction de piloter la ventilation de ladite étuve 1, c'est-à-dire le fonctionnement des cheminées d'extraction 20, des modules d'aspiration 12 et des ventilations additionnelles 30. De manière plus précise, l'unité de contrôle 40 est configurée, dans l'étuve 1 selon un aspect de l'invention, pour mettre en œuvre un procédé de ventilation de l'étuve selon un autre aspect de l'invention, qui est notamment particulier en ce qu'il prend en considération un modèle prédictif.

Le modèle prédictif intégré dans l'unité de contrôle 40 a notamment pour fonction de déterminer en temps réel lors du fonctionnement de l'étuve 1, et indépendamment dans chacun des caissons 8 ou dans chacun des ensembles de caissons 8, les besoins effectifs de ventilation en fonction d'une quantité de polluants P présents dans chacun des caissons 8 ou ensemble de caissons 8. On tire avantage d'un tel procédé de ventilation de l'étuve 1, utilisant le modèle prédictif, en ce qu'il permet de déterminer des besoins de ventilation de manière indépendante dans chacun des caissons 8 ou ensemble de caissons 8, sans nécessiter l'arrêt du fonctionnement de l'étuve 1. En d'autres termes, le procédé permet de passer d'une ventilation déterminée de manière globale pour l'étuve 1 à une ventilation individuelle pour chacun des caissons 8 ou ensemble de caissons 8 de l'étuve 1. On permet ainsi de limiter les risques d'explosion de l'étuve 1 tout en permettant une économie d'énergie lors de son fonctionnement.

Le procédé de ventilation de l'étuve 1, intégrant le modèle prédictif, va maintenant être décrit plus en détail.

On va dans un premier temps décrire la construction du modèle prédictif intégré dans le procédé de ventilation de l'étuve 1, ce dernier ayant au moins pour but de déterminer la quantité de polluants qui s'échappe du liant encollant le matériau minéral lors de sa cuisson dans l'étuve.

Pour ce faire, lors de l'élaboration du modèle prédictif, on effectue une étape de mesure de la perte de masse du liant encollant le matériau minéral pour plusieurs températures de cuisson possibles et pour plusieurs types de liants pouvant être utilisés pour former un tapis de fibres minérales par cuisson. Il convient de considérer ici que la température est une température de cuisson du matériau minéral utilisée uniquement lors de l'élaboration du modèle prédictif.

Lors de cette étape de mesure de la perte de masse, on définit tout d'abord un temps de cuisson du matériau minéral ainsi qu'une température de cuisson du four représentatif de l'étuve, et plus particulièrement d'un caisson de l'étuve. Par la suite, on pèse le matériau minéral comprenant le liant avant sa cuisson puis après sa cuisson. De la sorte on obtient une valeur de la perte de masse du liant encollant le matériau minéral pour une température de cuisson donnée et un temps donné. On répète alors l'opération pour différentes températures de cuisson afin d'obtenir une base de données comprenant la perte de masse du liant encollant le matériau minéral en fonction d'une température donnée. On effectue des opérations similaires en variant le type de liant afin d'obtenir une base de données de la perte de masse du liant en fonction de son type, à des températures données.

Plus particulièrement, la pesée du matériau minéral est réalisée une fois que toute l'eau est évaporée de l'échantillon analysée. La valeur de la perte de masse du liant encollant le matériau minéral pour une température de cuisson donnée et un temps donné telle qu'elle a été évoquée ci-dessus en soustrayant, à la différence de masse entre la pesée avant et après cuisson, la teneur en humidité de l'échantillon qui est connue au début de l'élaboration du modèle prédictif.

On comprend que cette valeur de perte de masse du liant encollant le matériau minéral correspond alors à la somme du dégagement d'une quantité de polluants et d'une masse de composés volatils non inflammables.

Dans le cadre de l'invention, le modèle prédictif est tel que l'on tient compte uniquement des polluants, c'est-à-dire des composés présentant des propriétés inflammables. En d'autres termes, on vise à associer à une température donnée une quantité de polluants dégagés lors de la cuisson, et plus particulièrement présents dans le caisson de l'étuve, sans tenir compte de la quantité de composés volatils ne présentant pas de propriétés inflammables, tel que les vapeurs d'eau, qui ont pu se dégager du matériau minéral et du liant associé lors de la cuisson.

Pour ce faire, on considère que la composition de la masse du liant encollant évaporé est la même que la composition du mélange de liant encollant présent avant cuisson. A titre d'exemple, lorsque le liant encollant est constitué à 30% d'un premier composé A, à 20% d'un deuxième composé B et à 50% d'un troisième composé C, la répartition des composants dans la masse du liant encollant évaporé est la même à savoir une répartition à 30% du premier composé A, à 20% du deuxième composé B et à 50% du troisième composé C.

Une fois cette détermination effectuée, et en ne considérant que les composés inflammables, on obtient ainsi une base de données, qui participe à former le modèle prédictif et qui permet d'associer des quantités de polluants P qui s'échappent du liant encollant le matériau minéral et susceptibles d'être présents dans un caisson ou un ensemble de caissons, en fonction d'une pluralité de températures et d'une pluralité de types de liants.

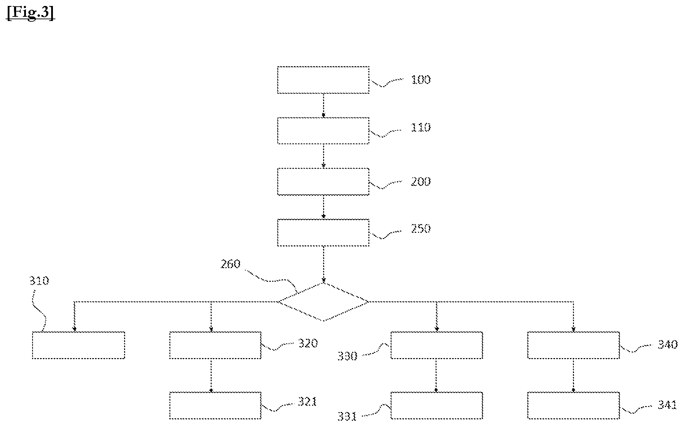

Le modèle prédictif ainsi réalisé est intégré dans l'unité de contrôle de l'étuve 1. Selon l'invention, l'unité de contrôle est apte à mettre en œuvre le modèle prédictif pour optimiser la ventilation de l'étuve en fonction des caractéristiques de fonctionnement de celle-ci, selon un procédé de ventilation qui va maintenant être décrit en référence à la figure 3.

Une première étape 100 du procédé de ventilation de l'étuve 1 consiste en l'application du modèle prédictif lors du fonctionnement de l'étuve 1. Dit autrement, on détermine la quantité de polluants P présents dans chacun d'au moins deux caissons 8, ici le premier caisson 8a et le deuxième caisson 8b ou chacun de deux ensembles de caissons 8 de l'étuve 1, sur la base du modèle prédictif. Il convient de considérer que dans la suite de la description, seuls les exemples de réalisation mettant en œuvre deux caissons 8 de l'étuve 1 seront exposés, mais que les caractéristiques du procédé s'appliquent *mutatis mutandis à* deux ensembles de caissons 8 ou plus et à l'ensemble des caissons 8 de l'étuve 1.

Afin de mettre en œuvre la première étape 100 du procédé de ventilation, on effectue un relevé d'une température effective Tp présente dans chacun des deux caissons 8 de l'étuve 1. On comprend que la température effective Tp est la température mesurée à l'intérieur d'un caisson durant le fonctionnement de l'étuve 1. On obtient alors une première température effective Tp1 pour le premier caisson 8a et une deuxième température effective Tp2 pour le deuxième caisson 8b. On utilise ensuite la base de données du modèle prédictif, intégrée dans l'unité de contrôle, pour déterminer la quantité de polluants P dans chacun du premier caisson 8a et du deuxième caisson 8b en fonction respectivement de la première température effective Tp1 et de la deuxième température effective Tp2 mesurées et du type de liant utilisé lors du fonctionnement de l'étuve 1. On obtient alors une première quantité de polluants P1 qui s'échappe du liant encollant le matériau minéral dans le premier caisson 8a et une deuxième quantité de polluants P2 qui s'échappe du liant encollant le matériau minéral dans le deuxième caisson 8b.

Lors d'une étape additionnelle 110 du procédé de ventilation de l'étuve 1, faisant suite à la première étape 100, on considère une quantité Q de fluide susceptible de passer d'un caisson 8 à l'autre au sein de l'étuve 1. Il est en effet connu que, lors du fonctionnement de l'étuve 1, des fuites de fluide peuvent subvenir d'un caisson 8 à l'autre, ayant pour effet, d'augmenter ou de diminuer la quantité de polluants P dans un des caissons 8. Dans cet exemple particulier de mise en œuvre, dans lequel l'étape additionnelle 110 est prévue après la première étape, l'unité de contrôle est paramétrée pour considérer cette quantité Q de fluide qui passe du deuxième caisson 8b au premier caisson 8a et inversement afin de déterminer la quantité de polluants P présent dans l'un et l'autre du premier caisson 8a et du deuxième caisson 8b.

Selon un exemple de l'invention, on détermine la quantité Q de fluide qui passe d'un caisson 8 à l'autre au moyen d'un traçage par un gaz inerte, pouvant être de l'hélium. Il convient de considérer que la détermination de la quantité Q de fluide est effectuée lors du réglage de l'étuve, c'est-à-dire préalablement à sa mise en fonctionnement. Les résultats de traçage au gaz inerte sont par la suite intégrés à l'unité de contrôle.

Lors du traçage par gaz inerte, on injecte de l'hélium au moins dans le premier caisson 8a et le deuxième caisson 8b de manière successive, afin de suivre les mouvements fluidiques entre ces derniers. A la suite de l'injection du gaz inerte dans le premier caisson 8a, on effectue des mesures de concentration dudit gaz inerte dans le premier caisson 8a et dans le deuxième caisson 8b ainsi que dans chacune des cheminées d'extraction 20 de l'étuve 1. De la même manière, à la suite de l'injection de gaz inerte dans le deuxième caisson 8b, on mesure la concentration de gaz inerte dans le premier caisson 8a et dans le deuxième caisson 8b ainsi que dans chacune des cheminées d'extraction 20 de l'étuve 1. La mesure de concentration de gaz inerte dans chacune des cheminées d'extraction 20 permet notamment de constater les fuites de gaz inerte en dehors de l'étuve 1.

A la suite de ces injections et de ces relevés de concentration de gaz inerte, on détermine par calcul un débit massique total de gaz circulant entre chacun des deux caissons 8. Ce calcul de débit massique total de gaz permet par la suite de déterminer une première quantité Q1 de fluide qui passe du deuxième caisson 8b au premier caisson 8a et une deuxième quantité Q2 de fluide qui passe du premier caisson 8a au deuxième caisson 8b.

Ainsi, la première quantité de polluants P1 du premier caisson 8a comprend d'une part la quantité de polluants P présents dans le premier caisson 8a et résultant de la cuisson du liant encollant le matériau minéral, cette quantité étant déterminée par le modèle prédictif, et comprend d'autre part la première quantité Q1 de fluide qui passe au moins du deuxième caisson 8b au premier caisson 8a et qui est déterminée par le traçage au gaz inerte. On comprend également que le traçage à l'hélium permet de déterminer une quantité de fluide qui passe éventuellement du troisième caisson 8c au premier caisson 8a.

De la même manière, la deuxième quantité de polluants P2 du deuxième caisson 8b comprend d'une part la quantité de polluants P présents dans le deuxième caisson 8b et résultant de la cuisson du liant encollant le matériau minéral, cette quantité étant déterminée par le modèle prédictif, et comprend d'autre part la deuxième quantité Q2 de fluide qui passe du premier caisson 8a au deuxième caisson 8b et qui est déterminée par le traçage au gaz inerte. On comprend également que le traçage à l'hélium permet de déterminer une quantité de fluide qui passe éventuellement du troisième caisson 8c au deuxième caisson 8b.

Une deuxième étape 200 du procédé consiste en la détermination par calcul d'un débit de ventilation minimal Vmin pour l'évacuation de la quantité de polluants P dans chacun des deux caissons 8, le débit de ventilation minimal Vmin étant la valeur minimale de débit d'air à faire circuler dans le caisson en dessous de laquelle il n'est pas possible d'assurer la ventilation correcte du caisson 8 en fonction des paramètres d'état du caisson, et notamment la température effective qui y réside. De manière plus précise, on détermine par calcul un premier débit de ventilation minimal Vmin1 pour l'évacuation de la première quantité de polluants P1 dans le premier caisson 8a et un deuxième débit de ventilation minimal Vmin2 pour l'évacuation de la deuxième quantité de polluants P2 du deuxième caisson 8b, en considérant une valeur limite explosive fixée pour chacun desdits caissons 8a, 8b.

La valeur limite explosive correspond à une valeur maximum au-delà de laquelle une quantité de polluants P1, P2 dans le premier caisson 8a et le deuxième caisson 8b peut générer une explosion. De manière plus précise, la valeur limite explosive correspond à une concentration, en g/m³, maximum de polluants pouvant être présents dans le premier caisson 8a et le deuxième caisson 8b, avant que cette concentration ne soit génératrice d'une explosion au sein de l'étuve 1. Cette valeur limite explosive est alors fixée pour une température effective ou une plage de températures effectives données de l'étuve 1. On définit une première valeur limite explosive pour le premier caisson 8a calculée suivant sa première température effective Tp1 et une deuxième valeur limite explosive pour le deuxième caisson 8b calculée suivant sa deuxième température effective Tp2.

On comprend alors que l'unité de contrôle détermine le premier débit de ventilation minimal Vmin1 pour le premier caisson 8a afin que la première quantité de polluants P1 ne dépasse pas la première valeur limite explosive. De même, l'unité de contrôle détermine le deuxième débit de ventilation minimal Vmin2 pour le deuxième caisson 8b afin que la deuxième quantité de polluant P2 ne dépasse pas la deuxième valeur limite explosive. Ainsi, la variation du débit de ventilation dans chacun des caissons 8 permet d'améliorer la ventilation dans chacun des caissons 8 et donc d'améliorer sa ventilation afin d'évacuer les polluants vers les caissons 8 voisins et/ou vers les cheminées d'extraction, permettant ainsi de diminuer la quantité de polluants présente dans chacun des caissons 8.

Il convient de considérer que lors du fonctionnement de l'étuve 1, la température effective Tp n'est pas figée et que celle-ci peut varier au cours du temps lors de la cuisson du liant encollant le matériau minéral. De manière similaire, la quantité de polluants P varie en fonction du temps, celle-ci étant dépendante de la température effective Tp mesurée au cours du fonctionnement de l'étuve 1.

A ce stade du procédé, on a déterminé grâce au modèle prédictif, et le cas échéant grâce au paramétrage de l'unité de contrôle avec les données de circulation d'air d'un caisson à l'autre obtenues par le procédé de traçage au gaz inerte, la quantité de polluants P1, P2 présents dans chacun du premier caisson 8a et du deuxième caisson 8b et le débit de ventilation minimum Vmin1, Vmin2 nécessaire pour chacun des deux caissons 8, pendant le fonctionnement de l'étuve 1.

Il convient de considérer à ce stade, qu'avant le fonctionnement de l'étuve, on détermine une valeur seuil S de débit de ventilation maximum, que chacun des caissons 8 de l'étuve 1 peut fournir. Dit autrement, on détermine la capacité de ventilation maximum que les modules d'aspirations 12 de chacun des caissons 8 et les cheminées d'extraction 20 peuvent générer dans chacun des caissons 8. De manière plus précise, on détermine une première valeur seuil S1 de débit de ventilation maximum du premier caisson 8a prenant en compte la ventilation effectuée par le module d'aspiration 12 qui lui est spécifique ainsi que l'impact de l'aspiration des cheminées d'extraction 20 sur le premier caisson 8a. De même, on détermine une deuxième valeur S2 de débit de ventilation maximum du deuxième caisson 8b prenant en compte la ventilation effectuée par le module d'aspiration 12 qui lui est propre ainsi que l'impact de l'aspiration des cheminées d'extraction 20 sur le deuxième caisson 8b.

Il convient de considérer que l'impact de l'aspiration des cheminées d'extraction 20 peut varier d'un caisson 8 à l'autre de l'étuve 1, notamment en fonction de la position du caisson 8 au sein de ladite étuve 1. Dans l'exemple illustré, le premier caisson 8a étant le plus proche de l'entrée 2 de l'étuve 1 et donc de la première cheminée d'extraction 20a, l'impact de l'aspiration de la première cheminée d'extraction 20a sera plus important sur le premier caisson 8a que sur le deuxième caisson 8b plus éloigné de ladite première cheminée d'extraction 20a. Plus généralement, les valeurs seuils de débit de ventilation déterminées pour des caissons proches des cheminées d'extraction, que ce soit en entrée ou en sortie, sont plus élevées que les valeurs seuils de débit de ventilation déterminées pour des caissons disposés sensiblement au centre de l'étuve. Dans l'exemple illustré, la première valeur seuil S1 du premier caisson 8a est plus importante que la deuxième valeur seuil S2 du deuxième caisson 8b.

Au cours d'une étape intermédiaire 250 du procédé, réalisée dans l'exemple illustré sur la figure 3 à la suite de la deuxième étape mais qui pourrait être réalisée parallèlement, on détermine par mesure, au sein de l'étuve 1, un débit effectif de ventilation dans chacun des caissons 8. De manière plus précise, on mesure un premier débit effectif de ventilation et un deuxième débit effectif de ventilation respectivement au sein du premier caisson 8a et du deuxième caisson 8b. On entend par débit effectif de ventilation le débit d'air circulant dans chacun des caissons qui est mesuré au cours du fonctionnement de l'étuve 1.

Une fois le premier débit effectif de ventilation et le deuxième débit effectif de ventilation mesurés dans le premier caisson 8a et le deuxième caisson 8b, on compare ces deux valeurs respectivement au premier débit de ventilation minimal Vmin1 et au deuxième débit de ventilation minimal Vmin2 calculés précédemment lors de la deuxième étape 200 du procédé. On vérifie alors que le débit effectif de ventilation du premier caisson 8a et du deuxième caisson 8b est suffisant pour l'évacuation de la quantité de polluants P1, P2 présents dans chacun desdits caissons 8 et donc au moins égale au premier débit de ventilation minimal Vmin1 et au deuxième débit de ventilation minimal Vmin2.

Par la suite, on effectue une étape de comparaison 260 des débits effectifs de ventilation mesurés dans chacun des caissons 8 avec les débits de ventilation minimal Vmin pour l'évacuation des polluants P dans chacun desdits caissons 8 et également avec les valeurs seuil S de débit de ventilation maximum de chacun des caissons 8.

En fonction des résultats de ces comparaisons, une troisième étape est mise en œuvre pour réaliser ou non des actions correctives sur la ventilation de l'étuve.

Lors de la troisième étape, dans une première configuration de l'étuve 310, le débit effectif de ventilation mesuré dans un des caissons 8 peut être au moins égale au débit de ventilation minimal Vmin pour l'évacuation des polluants P, ce dernier étant inférieur ou égal à la valeur seuil S de ventilation maximum du caisson 8. Dans cette première configuration, la ventilation additionnelle 30 n'est pas activée et le débit de ventilation des cheminées d'extraction 20 n'est pas augmenté. On comprend donc qu'ici, le fonctionnement de l'étuve n'est pas modifié et n'est pas interrompu.

En d'autres termes, en considérant à titre d'exemple le premier caisson, lorsque le premier débit effectif de ventilation mesuré dans le premier caisson 8a est au moins égale au premier débit de ventilation minimal Vmin1 pour l'évacuation de la première quantité de polluants P1 et que ledit premier débit de ventilation minimal Vmin1 est inférieur ou égale à la première valeur seuil S1 de débit de ventilation maximum dudit premier caisson 8a, l'unité de contrôle 40 ne commande pas la mise en route de la première ventilation additionnelle 30a ou l'augmentation du débit de ventilation des cheminées d'extraction 20. En effet, dans une telle configuration la première quantité de polluants P1 présents dans le premier caisson 8a ne présente pas de risque d'explosion et la ventilation effective du premier caisson 8a suffit à maintenir cette quantité de polluants en dessous de la valeur limite explosive.

Toujours lors de la troisième étape, dans une deuxième configuration 320 de l'étuve 1, lorsque le débit effectif de ventilation mesuré dans un caisson 8 est supérieur au débit de ventilation minimal Vmin du caisson correspondant de plus d'une valeur définie, par exemple égale à 30% du débit de ventilation minimal, l'unité de contrôle 40 génère une première instruction de commande 321 spécifique de réduction du débit d'extraction d'au moins la première cheminée d'extraction 20a et/ou la deuxième cheminée d'extraction 20b et/ou du module d'aspiration 12 du caisson 8 correspondant.

On tire avantage d'une telle première instruction de commande 321 en ce qu'elle permet une diminution de la consommation énergétique du fonctionnement de l'étuve 1 tout en conservant une sécurité optimale par rapport aux risques d'explosion de l'étuve 1 dû aux polluants qui s'échappe du liant encollant le matériau minéral lors de sa cuisson.

Il convient de noter que cette réduction du débit d'extraction peut être conditionnée au fait que le caisson ou l'ensemble de caissons dans lequel la quantité de polluants est la plus concentrée présente une concentration de polluants inférieure à 40% de la valeur limite explosive LEL.

Selon une troisième configuration de l'étuve 330, lorsque le débit effectif de ventilation mesuré dans un caisson 8 est inférieur au débit de ventilation minimal Vmin pour l'évacuation de la quantité de polluants P dans ledit caisson 8 et que ledit débit de ventilation minimal Vmin est inférieur à la valeur seuil S de débit de ventilation maximum du caisson 8, l'unité de contrôle 40 génère une deuxième instruction de commande 331 spécifique pour le caisson 8, à savoir une augmentation de la puissance de ventilation de l'une et/ou l'autre des cheminées d'extraction 20 et/ou du module d'aspiration 12 dudit caisson 8.

On comprend alors que cette deuxième instruction de commande 331 spécifique permet d'ajuster la ventilation de l'étuve 1, de manière indépendante d'un caisson à l'autre, afin qu'elle soit optimale pour l'évacuation de polluants dans chacun des caissons, ici du premier caisson 8a. Pour ce qui est du calcul spécifique au premier caisson 8a, celui-ci ne génère pas de modification de la ventilation des autres caissons 8 de l'étuve 1 lors de cette deuxième instruction de commande 331 spécifique, celle-ci étant dirigée uniquement vers le premier caisson 8a. Il convient de comprendre que lors de cette troisième étape, le calcul est opéré indépendamment pour chaque caisson, de sorte que l'évacuation optimale de la première quantité de polluants P1 dans le premier caisson 8a peut alors être réalisée avec un débit de ventilation calculé de façon indépendante par rapport au débit de ventilation calculé pour le caisson voisin, c'est-à-dire le deuxième caisson 8b, et l'évacuation optimale des polluants présents dans ce caisson voisin.

Ainsi, on permet d'optimiser la ventilation de chacun des caissons 8 au cas par cas et ce pendant le fonctionnement de l'étuve 1 afin d'optimiser la sécurité quant aux risques d'explosion de l'étuve 1.

Selon une quatrième configuration de l'étuve 340, lors de la troisième étape du procédé, lorsque le débit de ventilation minimal Vmin pour l'évacuation de la quantité de polluants P calculé pour le caisson 8 est supérieur à la valeur seuil S de débit de ventilation maximum du caisson 8, l'unité de contrôle 40 génère une troisième instruction de commande 341 spécifique qui d'une part arrête temporairement le fonctionnement de l'étuve 1 et d'autre part active la ventilation additionnelle 30 du caisson 8.

On comprend que cette troisième instruction de commande 341 spécifique est générée lorsque l'étuve 1 n'est pas apte à assurer une ventilation suffisante lors de son fonctionnement pour évacuer la quantité de polluants P au niveau d'un des caissons 8. Dans ce contexte, et même si les autres caissons sont aptes à évacuer la quantité de polluants qui leur est propre, il est nécessaire de stopper le fonctionnement de l'étuve pour éviter qu'une première explosion ait lieu dans le caisson. Le fait d'avoir selon l'invention, via le modèle prédictif et le cas échéant la détermination des quantités de fluide échangées d'un caisson à l'autre, une détermination des polluants présents qui est indépendante pour chaque caisson permet d'éviter de considérer l'étuve dans son ensemble. Ceci permet notamment d'éviter que des quantités de polluants présents dans des caissons proches des cheminées d'extraction, c'est-à-dire des caissons avec des quantités basses de polluants, viennent pondérer des quantités importantes de polluants présents dans des caissons disposés au centre de l'étuve.

L'arrêt de l'étuve se prolonge jusqu'à ce que le fonctionnement de la ventilation additionnelle 30 et le module d'aspiration 12 du caisson 8 dans lequel il a été détecté un risque d'explosion, ainsi que le fonctionnement des cheminées d'extraction 20, rétablissent une concentration de polluants dans le caisson 8 correspondant qui soit inférieure à la valeur limite explosive déterminée précédemment. Par la suite, l'unité de contrôle 40 commande le rétablissement du fonctionnement de l'étuve 1 tout en poursuivant le contrôle de la ventilation de ladite étuve 1 suivant le procédé de ventilation exposé ci-dessus. On comprend que le procédé de ventilation telle qu'il vient d'être décrite pour un des caissons 8 s'applique *mutatis mutandis* à l'intégralité des caissons 8 de l'étuve ou ensemble de caissons de l'étuve 1.

On comprend alors que le procédé de ventilation de l'étuve 1 est mis en œuvre de façon continue lors du fonctionnement de l'étuve et que l'une ou l'autre des commandes spécifiques de la troisième étape peut être appliquée par l'unité de contrôle plusieurs fois et successivement pendant la cuisson du liant encollant le matériau minéral.

L'invention atteint donc bien le but qu'elle s'était fixé en optimisant la ventilation de l'étuve, en distinguant les besoins en ventilation de chacun des caissons de l'étuve au moyen d'un modèle prédictif déterminé en amont et en permettant une application du procédé de ventilation de manière continue durant le fonctionnement de l'étuve si le respect des valeurs limites d'explosion le permet.

## Revendications

1. Procédé de ventilation d'une étuve (1) configurée pour former un tapis de fibres minérales par cuisson d'un liant encollant un matériau minéral disposé sur un convoyeur (6), l'étuve (1) comprenant en série sur le trajet du convoyeur (6), une entrée (2), une pluralité de caissons (8) de chauffe et une sortie (4), **caractérisé en ce que** le procédé de ventilation comprend au moins la mise en œuvre, par une unité de contrôle (40) de l'étuve (1), de plusieurs étapes successives parmi lesquelles :
- une première étape de détermination par calcul, caisson (8) par caisson (8) ou ensemble de caissons (8) par ensemble de caissons (8), d'une quantité de polluants (P) présents dans au moins deux caissons (8) ou deux ensembles de caissons (8) de l'étuve (1), ladite première étape mettant en œuvre une comparaison des caractéristiques du fonctionnement en cours de l'étuve (1) avec un modèle prédictif défini en amont et implémenté dans l'unité de contrôle (40) de l'étuve (1),
- une deuxième étape de détermination par calcul d'un débit de ventilation minimal (Vmin) pour l'évacuation de la quantité de polluants (P) dans chacun des deux caissons (8) ou des deux ensembles de caissons (8),
- une troisième étape de génération d'une instruction de commande indépendante à destination de chacun des caissons (8), ou de chacun des ensembles de caissons (8), pour une ventilation spécifique de chaque caisson ou de chaque ensemble de caissons en fonction du débit de ventilation minimal (Vmin) calculé précédemment spécifiquement pour chacun des caissons (8) ou ensemble de caissons (8).

2. Procédé de ventilation d'une étuve (1) selon la revendication précédente, comprenant au moins une étape de construction du modèle prédictif implémenté dans l'unité de contrôle (40).

3. Procédé de ventilation d'une étuve (1) selon la revendication précédente, au cours duquel, lors de l'étape de construction du modèle prédictif, on détermine au moins une perte de masse du matériau minéral en fonction d'une température de cuisson.

4. Procédé de ventilation d'une étuve (1) selon la revendication précédente, au cours duquel, lors de l'étape de construction du modèle prédictif, on utilise au moins la perte de masse du matériau minéral pour déterminer la quantité de polluants (P) dégagée lors de la cuisson du matériau minéral.

5. Procédé de ventilation d'une étuve (1) selon l'une quelconque des revendications précédentes, au cours duquel lors d'une étape préliminaire préalable à la première étape, on mesure une température effective (Tp) dans chacun des caissons (8) ou ensembles de caissons (8).

6. Procédé de ventilation d'une étuve (1) selon l'une quelconque des revendications précédentes, au cours duquel préalablement à la troisième étape, on détermine une valeur seuil (S) de débit de ventilation maximum dans chacun des caissons (8) ou ensemble de caissons (8) de l'étuve.

7. Procédé de ventilation d'une étuve (8) selon l'une quelconque des revendications précédentes, au cours duquel lors d'une étape intermédiaire, préalablement à la troisième étape, on mesure un débit effectif de ventilation dans chacun des caissons (8) ou ensembles de caissons (8), et on compare le débit effectif de ventilation de chacun des caissons (8) ou ensembles de caissons (8) au débit de ventilation minimal (Vmin) déterminé lors de la deuxième étape pour l'évacuation des polluants (P) dans lesdits caissons (8) ou ensembles de caissons (8).

8. Procédé de ventilation d'une étuve (1) selon les revendications 6 et 7, au cours duquel lors de la troisième étape, lorsque le débit effectif de ventilation mesuré dans un des caissons (8) ou un des ensembles de caissons (8) est inférieur au débit de ventilation minimal (Vmin) pour l'évacuation des polluants (P) dans ledit caisson (8) et que ledit débit de ventilation minimal (Vmin) est inférieur à la valeur seuil (S) de débit de ventilation maximum dudit caisson (8) ou dudit ensemble de caissons (8), on augmente la puissance d'extraction d'au moins une cheminée d'extraction (20) commune à l'ensemble de l'étuve (1) et/ou d'un module d'aspiration (12) propre audit caisson (8) ou audit ensemble de caissons (8).

9. Procédé de ventilation d'une étuve (1) selon l'une quelconque des revendications 1 à 7 en combinaison avec la revendication 6, au cours duquel lors de la troisième étape, lorsque le débit de ventilation minimal (Vmin) est supérieur à la valeur seuil (S) de débit de ventilation maximum dudit caisson (8) ou dudit ensemble de caissons (8), on arrête le fonctionnement de l'étuve (1) et on active au moins une ventilation additionnelle (30) dans le caisson (8) ou ensemble de caissons (8).

10. Procédé de ventilation d'une étuve (1) selon l'une quelconque des revendications précédentes, au cours duquel, lors d'une étape additionnelle et préalablement à la deuxième étape, on détermine par calcul une quantité (Q) de fluide susceptible de passer d'un caisson (8) à un autre caisson (8), ou d'un ensemble de caissons (8) à un autre ensemble de caissons (8), lors du fonctionnement de l'étuve, la quantité (Q) de fluide étant prise en compte pour déterminer la quantité de polluants (P) présents dans un caisson (8) ou un ensemble de caissons (8) lors de la première étape.

11. Procédé de ventilation d'une étuve (1) selon l'une quelconque des revendications précédentes, dans lequel les étapes du procédé sont effectuées au cours du fonctionnement de l'étuve (1).

12. Etuve (1) configurée pour former un tapis de fibres minérales par cuisson d'un liant encollant un matériau minéral disposé sur un convoyeur (6), l'étuve (1) comprenant en série sur le trajet du convoyeur (6), une entrée (2), une pluralité de caissons (8) de chauffe et une sortie (4), **caractérisée en ce que** l'étuve (1) comprend au moins une unité de contrôle (40) configurée pour piloter le fonctionnement de chacun des caissons (8) selon le procédé de ventilation selon l'une quelconque des revendications 1 à 11.

13. Etuve (1) selon la revendication précédente, dans laquelle chacun des caissons (8) de la pluralité de caissons (8) comprend au moins une ventilation additionnelle (30), la ventilation additionnelle (30) étant pilotée par l'unité de contrôle (40) selon le procédé de ventilation de l'étuve (1).

## Patentansprüche

1. Verfahren zur Belüftung eines Trockenofens (1), der konfiguriert ist, um durch Einbrennen eines Bindemittels, mit dem ein auf einem Förderband (6) angeordnetes mineralisches Material verklebt wird, eine Matte aus Mineralfasern zu bilden, wobei der Trockenofen (1) der Reihe nach entlang des Förderbandwegs (6) einen Einlass (2), eine Vielzahl von Heizkammern (8) und einen Auslass (4) umfasst, **dadurch gekennzeichnet, dass** der Belüftungsprozess mindestens die Durchführung mehrerer aufeinanderfolgender Schritte durch eine Steuereinheit (40) des Trockenofens (1) umfasst, darunter:
- einen ersten Schritt der Bestimmung durch Berechnung, Kammer (8) für Kammer (8) oder Kammergruppe (8) für Kammergruppe (8), einer Menge an Schadstoffen (P), die in mindestens zwei Kammern (8) oder zwei Kammergruppen (8) des Trockenofens (1) vorhanden sind, wobei in diesem ersten Schritt ein Vergleich der Eigenschaften des aktuellen Betriebs des Trockenofens (1) mit einem vorgelagert definierten und in der Steuereinheit (40) des Trockenofens (1) implementierten Vorhersagemodell durchgeführt wird,
- einen zweiten Schritt der Bestimmung durch Berechnung einer minimalen Belüftungsdurchflussrate (Vmin) für die Abführung der Menge an Schadstoffen (P) in jeder der beiden Kammern (8) oder der beiden Kammergruppen (8),
- einen dritten Schritt des Erzeugens einer unabhängigen Steueranweisung, die an jede der Kammern (8) oder jede der Kammergruppen (8) gerichtet ist, für eine spezifische Belüftung jeder Kammer oder jeder Kammergruppe in Abhängigkeit von der zuvor spezifisch für jede der Kammern (8) oder der Kammergruppen (8) berechnete minimale Belüftungsdurchflussrate (Vmin).

2. Verfahren zur Belüftung eines Trockenofens (1) nach dem vorstehenden Anspruch, umfassend mindestens einen Schritt der Erstellung des in der Steuereinheit (40) implementierten Vorhersagemodells.

3. Verfahren zur Belüftung eines Trockenofens (1) nach dem vorstehenden Anspruch, wobei während des Schritts der Erstellung des Vorhersagemodells mindestens ein Massenverlust des mineralischen Materials in Abhängigkeit von einer Einbrenntemperatur bestimmt wird.

4. Verfahren zur Belüftung eines Trockenofens (1) nach dem vorstehenden Anspruch, wobei während des Schritts der Erstellung des Vorhersagemodells mindestens der Massenverlust des mineralischen Materials zum Bestimmen der beim Einbrennen des mineralischen Materials freigesetzten Menge an Schadstoffen (P) verwendet wird.

5. Verfahren zum Belüften eines Trockenofens (1) nach einem der vorstehenden Ansprüche, wobei in einem vorbereitenden Schritt vor dem ersten Schritt in jeder der Kammern (8) oder Kammergruppen (8) eine effektive Temperatur (Tp) gemessen wird.

6. Verfahren zum Belüften eines Trockenofens (1) nach einem der vorstehenden Ansprüche, wobei vor dem dritten Schritt ein Schwellenwert (S) der maximalen Belüftungsdurchflussrate in jeder der Kammern (8) oder Kammergruppen (8) des Ofens bestimmt wird.

7. Verfahren zur Belüftung eines Trockenofens (8) nach einem der vorstehenden Ansprüche, wobei in einem Zwischenschritt vor dem dritten Schritt in jeder der Kammern (8) oder Kammergruppen (8) eine effektive Belüftungsdurchflussrate gemessen wird und diese effektive Belüftungsdurchflussrate jeder der Kammern (8) oder Kammergruppen (8) mit der im zweiten Schritt bestimmten minimalen Belüftungsdurchflussrate (Vmin) zur Abführung von Schadstoffen (P) in den Kammern (8) oder Kammergruppen (8) verglichen wird.

8. Verfahren zur Belüftung eines Trockenofens (1) nach den Ansprüchen 6 und 7, wobei im dritten Schritt, wenn die effektive Belüftungsdurchflussrate, die in einer der Kammern (8) oder einer der Kammergruppen (8) gemessen wird, kleiner ist als die minimale Belüftungsdurchflussrate (Vmin) für die Abführung von Schadstoffen (P) in dieser Kammer (8) und diese minimale Belüftungsdurchflussrate (Vmin) kleiner ist als der Schwellenwert (S) der maximalen Belüftungsdurchflussrate dieser Kammer (8) oder dieser Kammergruppe (8), die Absaugleistung mindestens eines für den gesamten Trockenofen (1) gemeinsam genutzten Absaugkamins (20) und/oder eines Ansaugmoduls (12), das spezifisch für diese Kammer (8) oder diese Kammergruppe (8) vorgesehen ist, erhöht wird.

9. Verfahren zur Belüftung eines Trockenofens (1) nach einem der Ansprüche 1 bis 7 in Verbindung mit Anspruch 6, wobei im dritten Schritt, wenn die minimale Belüftungsdurchflussrate (Vmin) größer ist als der Schwellenwert (S) der maximalen Belüftungsdurchflussrate der Kammer (8) oder der Kammergruppe (8), der Betrieb des Trockenofens (1) gestoppt und mindestens eine zusätzliche Belüftung (30) in der Kammer (8) oder der Kammergruppe (8) aktiviert wird.

10. Verfahren zur Belüftung eines Trockenofens (1) nach einem der vorstehenden Ansprüche, wobei in einem zusätzlichen Schritt und vor dem zweiten Schritt eine Menge (Q) eines Fluids, das während des Betriebs des Trockenofens von einer Kammer (8) zu einer anderen Kammer (8) oder von einer Kammergruppe (8) zu einer anderen Kammergruppe (8) gelangen kann, durch Berechnung bestimmt wird, wobei die Fluidmenge (Q) zur Bestimmung der Menge an Schadstoffen (P), die sich während des ersten Schritts in einer Kammer (8) oder einer Kammergruppe (8) befinden, herangezogen wird.

11. Verfahren zur Belüftung eines Trockenofens (1) nach einem der vorstehenden Ansprüche, wobei die Verfahrensschritte während des Betriebs des Trockenofens (1) durchgeführt werden.

12. Trockenofen (1), der konfiguriert ist, um durch Einbrennen eines Bindemittels, mit dem ein auf einem Förderband (6) angeordnetes mineralisches Material verklebt wird, eine Matte aus Mineralfasern zu bilden, wobei der Trockenofen (1) der Reihe nach entlang des Förderbandwegs (6) einen Einlass (2), eine Vielzahl von Heizkammern (8) und einen Auslass (4) umfasst, **dadurch gekennzeichnet, dass** der Trockenofen (1) mindestens eine Steuereinheit (40) umfasst, die konfiguriert ist, um den Betrieb jeder der Kammern (8) gemäß dem Belüftungsverfahren nach einem der Ansprüche 1 bis 11 zu steuern.

13. Trockenofen (1) nach dem vorstehenden Anspruch, wobei jede der Kammern (8) der Vielzahl von Kammern (8) mindestens eine zusätzliche Belüftung (30) umfasst, wobei die zusätzliche Belüftung (30) von der Steuereinheit (40) gemäß dem Verfahren zur Belüftung des Trockenofens (1) gesteuert wird.

## Claims

1. A method for ventilating an oven (1) configured to form a mat of mineral fibers by firing a binder bonding a mineral material placed on a conveyor (6), the oven (1) comprising, in series on the path of the conveyor (6), an inlet (2), a plurality of heating chambers (8) and an outlet (4), **characterized in that** the ventilation method comprises at least the implementation, by a control unit (40) of the oven (1), of a plurality of successive steps that comprise:
- a first step of determining by computing, chamber (8) by chamber (8) or set of chambers (8) by set of chambers (8), an amount of pollutants (P) present in at least two chambers (8) or two sets of chambers (8) of the oven (1), said first step implementing a comparison of the features of the current operation of the oven (1) with a predictive model defined upstream and implemented in the control unit (40) of the oven (1),
- a second step of determining by computing a minimum ventilation flow rate (Vmin) for the discharge of the amount of pollutants (P) in each of the two chambers (8) or of the two sets of chambers (8),
- a third step of generating an independent control instruction intended for each of the chambers (8), or of each of the sets of chambers (8), for specific ventilation of each chamber or of each set of chambers as a function of the minimum ventilation flow rate (Vmin) calculated previously specifically for each of the chambers (8) or set of chambers (8).

2. The method for ventilating an oven (1) according to the preceding claim, comprising at least one step of constructing the predictive model implemented in the control unit (40).

3. The method for ventilating an oven (1) according to the preceding claim, wherein, during the step of constructing the predictive model, at least one loss of mass of the mineral material is determined as a function of a firing temperature.

4. The method for ventilating an oven (1) according to the preceding claim, wherein, during the step of constructing the predictive model, at least the loss of mass of the mineral material is used to determine the amount of pollutants (P) released during the firing of the mineral material.

5. The method for ventilating an oven (1) according to any one of the preceding claims, wherein during a preliminary step prior to the first step, an effective temperature (Tp) in each of the chambers (8) or sets of chambers (8) is measured.

6. The method for ventilating an oven (1) according to any one of the preceding claims, wherein prior to the third step, a maximum ventilation flow rate threshold value (S) is determined in each of the chambers (8) or set of chambers (8) of the oven.

7. The method for ventilating an oven (8) according to any one of the preceding claims, wherein during an intermediate step, prior to the third step, an effective ventilation flow rate is measured in each of the chambers (8) or sets of chambers (8), and the effective ventilation flow rate of each of the chambers (8) or sets of chambers (8) is compared with the minimum ventilation flow rate (Vmin) determined during the second step for the discharge of the pollutants (P) from said chambers (8) or sets of chambers (8).

8. The method for ventilating an oven (1) according to claims 6 and 7, wherein during the third step, when the effective ventilation flow rate measured in one of the chambers (8) or one of the sets of chambers (8) is less than the minimum ventilation flow rate (Vmin) for the discharge of the pollutants (P) in said chamber (8) and that said minimum ventilation flow rate (Vmin) is less than the maximum ventilation flow rate threshold value (S) of said chamber (8) or of said set of chambers (8), the extraction power of at least one extraction chimney (20) that is shared by the whole of the oven (1) and/or of a suction module (12) specific to said chamber (8) or to said set of chambers (8) is increased.

9. The method for ventilating an oven (1) according to any one of claims 1 to 7 in combination with claim 6, wherein during the third step, when the minimum ventilation flow rate (Vmin) is greater than the maximum ventilation flow rate threshold value (S) of said chamber (8) or of said set of chambers (8), the operation of the oven (1) is stopped and at least one additional ventilation (30) is activated in the chamber (8) or set of chambers (8).

10. The method for ventilating an oven (1) according to any one of the preceding claims, during which, in an additional step and prior to the second step, an amount (Q) of fluid likely to pass from one chamber (8) to another chamber (8), or from one set of chambers (8) to another set of chambers (8), is computed during the operation of the oven, the amount (Q) of fluid being taken into account in order to determine the amount of pollutants (P) present in a chamber (8) or a set of chambers (8) during the first step.

11. The method for ventilating an oven (1) according to any one of the preceding claims, wherein the steps of the method are carried out during the operation of the oven (1).

12. An oven (1) configured to form a mat of mineral fibers by firing a binder bonding a mineral material placed on a conveyor (6), the oven (1) comprising, in series on the path of the conveyor (6), an inlet (2), a plurality of heating chambers (8) and an outlet (4), **characterized in that** the oven (1) comprises at least one control unit (40) configured to control the operation of each of the chambers (8) according to the ventilation method according to any one of claims 1 to 11.

13. The oven (1) according to the preceding claim, wherein each of the chambers (8) of the plurality of chambers (8) comprises at least one additional ventilation unit (30), the additional ventilation unit (30) being controlled by the control unit (40) according to the method for ventilating the oven (1).
